(19) Europäisches Patentamt

European Patent Office

Office européen des brevets

(11) **EP 1 626 567 A2**

(12) **EUROPEAN PATENT APPLICATION**

(43) Date of publication:
**15.02.2006 Bulletin 2006/07**

(51) Int Cl.:
*H04N 1/407* (2006.01)

(21) Application number: **05107143.9**

(22) Date of filing: **02.08.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **10.08.2004 JP 2004233480**

(71) Applicant: **Konica Minolta Medical & Graphic, Inc.
Tokyo 163-0512 (JP)**

(72) Inventor: **Kaji, Daisuke
192-8505, Tokyo (JP)**

(74) Representative: **Henkel, Feiler & Hänzel
Möhlstrasse 37
81675 München (DE)**

(54) **Image processing system and image processing method**

(57) This invention relates to a system, a method and a program for processing image information, by which image information of a subject is gradation-converted by using a gradation conversion curve. The system for processing image information, includes: an input section for inputting image information of a subject; a setting section for setting a gradient curve representing a change rate of an output value between neighbor values of each of the plurality of pixel values of the image information; a generating section for generating a gradation conversion curve by integrating the gradient curve; and an image processing section for applying a gradation conversion to the image information by using the gradation conversion curve.

EP 1 626 567 A2

## Description

This application is based on Japanese Patent Application No. 2004-233480 filed on August 10, 2004, in Japanese Patent Office, the entire content of which is hereby incorporated by reference.

## FIELD OF THE INVENTION

This invention relates to a system, a method and a program for processing image information, by which image information of a subject is gradation-converted by using a gradation conversion curve.

## BACKGROUND OF THE INVENTION

Recently, in the field of X-ray image generation apparatus that forms a transmitted X-ray through a subject on the image, digitalization and highly refining of the image are advanced. Herein, image information includes much of the information relating to a disease or a focus of a subject.

On the other hand, when the information is displayed and diagnosed by operators (doctors, radiologists and so on), it is necessary that a disease or a focus of a subject is precisely and easily caught by a visual sense of human. Herein, the image information is gradation-converted by a gradation conversion curve, so that particularly a region of interested is precisely and easily caught by a visual sense of human, and is displayed.

Herein, this gradation conversion curve is stored in a memory in a form of LUT (Luck Up Table), and parameters of the gradation conversion curve, for example, a shift amount or a rotation amount with respect to the basic LUT is set and applied at need. Then, after the gradation conversion curve is optimized, it is applied to the gradation conversion of the image information (for example, refer to Patent Document 1).

[Patent Document 1] Tokkaihei No. 09-16762 (Page 1, Fig. 1 (typical drawing)).

However, according to the above-described background technology, there is a limitation for the purpose that the gradation conversion curve is optimized. That is, the gradation conversion curve is actually converted after a modification by parameters with respect to a basic gradation conversion curve previously stored in a single or a plurality of LUT is added. Although this is simple and is able to correspond to a change of a certain degree of basic gradation conversion curve, it is not enough for satisfying a high level requirement for recent reading.

Particularly, in the disease information of a subject included in image information, the existing gradation range is different depending on the kind of a disease and/or the subject. So it is difficult to realize displaying just the existing gradation range which changes every reading times in a high contrast, by only the modification of the basic gradation conversion characteristic curve.

## SUMMARY OF THE INVENTION

It can be seen that it becomes important how to realize an image processing system which generates a gradation conversion curve providing a high contrast easily in an existing gradation range of generated image.

This invention is attained to solve the problem by the above-described background technology, and an object of this invention is to provide an image processing system by which the gradation conversion curve which becomes a high contrast in an existing gradation range of the generated image to be obtained is easily generated.

In order to solve the above-described problems and to attain an object, a system for processing image information according to the invention written in item 1 has: an input section for inputting image information of a subject; a setting section for setting a gradient curve representing a change rate of an output value between neighbor values of each of the plurality of pixel values of the image information; a generating section for generating a gradation conversion curve by integrating the gradient curve; and an image processing section for applying a gradation conversion to the image information by using the gradation conversion curve.

In this embodiment written in item 1, the setting section sets an gradient curve representing a change rate of an output value between neighbor values of each of inputted values (pixel values) of the image information, the generating section generates the gradation conversion curve by integrating the gradient curve, and the image processing section applies the gradation conversion to the image information by using the gradation conversion curve.

As described above, according to the embodiment written in item 1, by generating the gradation conversion curve using the gradient curve by which the doctors can institutionally grasp the contrast for each of pixel values inputs X-rays transmitted through a subject, it is easily possible to realize a gradation conversion curve which becomes a desired contrast on a desired value outputs density or the like by the doctor and to conduct the reading in the favorite gradation in which the doctor can observe precisely and easily.

## BRIEF DESCRIPTION OF THE DRAWINGS

Embodiments will now be described, by way of example only, with reference to the accompanying drawings which are meant to be exemplary, not limiting, and wherein like elements numbered alike in several Figures, in which:

Fig. 1 is a block diagram showing an entire structure of an image processing apparatus;

Fig. 2 is a block diagram showing the structure of an X-ray image generation system;

Fig. 3 is a characteristic view showing an example of a gradation conversion curve;

Fig. 4 is a characteristic view showing an example of a gradient curve;

Fig. 5 is a flow chart showing operations of an image processing apparatus of an embodiment 1;

Fig. 6 is an explanatory view showing a display screen of a display section of the embodiment 1 (No. 1);

Fig. 7 is an explanatory view showing the display screen of the display section of the embodiment 1 (No. 2);

Fig. 8 is a block diagram showing a generating means of the image processing apparatus of the embodiment 2;

Figs. 9(a) and 9(b) are characteristic views showing examples of a gradation conversion curve and a gradient curve;

Fig. 10 is a characteristic view showing an example of a gradient curve; and

Figs. 11(a) and 11(b) are characteristic views showing examples of a gradation conversion curve and a gradient curve.

## DETAILED DESCRIPTION OF THE INVENTION

Preferred embodiments according to the present invention is described below.

In the embodiment written in item 2 according to the system of item 1, the setting section comprises an operating section for inputting a plurality of pixel values and a plurality of gradient curve values corresponding to the plurality of pixel values.

In this embodiment written in item 2, the setting section inputs a plurality of pixel values and a value of the gradient curve corresponding to the plurality of pixel values by the operating section.

Further, in the embodiment written in item 3, according to the system of item 1, the setting section sets the gradient curve to a convex function of a pixel value of the image information.

In this embodiment written in item 3, the setting section makes the gradient curve a convex function.

Further, in the embodiment written in item 4 according to the system of item 3, the setting section comprises an operating section for inputting: a minimum value and a maximum value of a range of the plurality of pixel values where the gradient curve has a positive value; a maximum value of the gradient curve; and a pixel value of the maximum value of the gradient curve.

In this embodiment written in item 4, the setting section inputs the minimum value and the maximum value of a range of pixel value in which the gradient curve has a positive value, and the maximum value of the gradient curve and the pixel value having the maximum value by the operating section.

Further, in the embodiment written in item 5 according to the system of item 3, the setting section comprises an operating section for inputting a minimum value and a maximum value of a range of the plurality of pixel values where the gradient curve has a positive value.

In this embodiment written in item 5, the setting section inputs a minimum value and a maximum value of a range of the plurality of pixel values where the gradient curve has a positive value by using the operating section.

Herein, in the embodiment written in item 6 according to the system of item 3, the setting section may set an integrated value of the gradient curve over a whole of the plurality of pixel values to a default value according to the type of an output apparatus.

In the embodiment written in item 7 according to the system of item 3, the operating section may further input an integrated value of the gradient curve over a whole of the plurality of pixel values.

In the embodiment written in item 8 according to the system of item 3, the operating section may further input: an input pixel value; a value of the gradient curve corresponding to the input pixel value; and an integrated value of the gradient curve from a minimum value of a range of the pixel values where the gradient curve has a positive value to the input pixel value.

Further, in the embodiment written in item 9 according to the system of any one of items 1 to 8, the setting section sets an integrated value of the gradient curve over a whole of the plurality of pixel values to a default value according to a type of an output apparatus.

In the embodiment written in item 10 according to the system of any one of items 1 to 9, the setting section may comprise an operating section for inputting the integrated value of the gradient curve over a whole of the plurality of pixel values.

In this embodiment written in item 9, the setting section sets an integrated value of the gradient curve over a whole of the plurality of pixel values to a default value according to the type of an output apparatus.

Further, the embodiment written in item 11 according to the system of any one of items 1 to 10, further comprises: an optimizing section for using the gradation conversion curve as a basic gradation conversion curve and optimizing the basic gradation conversion curve by a shift amount shifting the basic gradation conversion curve parallel to a pixel-value direction and by a rotating amount changing a gradation amount of the basic gradation conversion curve; wherein the generating section comprises a calculation section for calculating the shift amount and the rotating amount based on the gradient curve.

In this invention written in item 11, the generating section calculates the shift amount and the rotation amount based on the gradient curve by the calculation section.

The embodiment written in item 12 is a method of processing image information according to has: an input step of inputting image information of a subject; a setting step of setting a gradient curve representing a change rate of an output value between neighbor values of each of the plurality of pixel values of the image information; a generating setting step generating a gradation conversion curve by integrating the gradient curve; and an image processing setting step applying a gradation conversion to the image information by using the gradation conversion curve.

In the embodiment written in item 13 according to the method of item 12, the setting step comprises an operating setting step inputting a plurality of pixel values and a plurality of gradient curve values corresponding to the plurality of pixel values.

Further, in the embodiment written in item 14, according to the method of item 12, the setting step sets the gradient curve to a convex function of a pixel value of the image information.

Further, in the embodiment written in item 15 according to the method of item 14, the setting step comprises an operating setting step inputting: a minimum value and a maximum value of a range of the plurality of pixel values where the gradient curve has a positive value; a maximum value of the gradient curve; and a pixel value of the maximum value of the gradient curve.

Further, in the embodiment written in item 16 according to the method of item 14, the setting step comprises an operating setting step inputting a minimum value and a maximum value of a range of the plurality of pixel values where the gradient curve has a positive value.

Herein, in the embodiment written in item 17 according to the method of item 14, the setting step may further set an integrated value of the gradient curve over a whole of the plurality of pixel values according to the type of an output apparatus.

In the embodiment written in item 18 according to the method of item 14, the operating step may further input an integrated value of the gradient curve over a whole of the plurality of pixel values.

In the embodiment written in item 19 according to the method of item 16, the operating step may further input: an input pixel value; a value of the gradient curve corresponding to the input pixel value; and an integrated value of the gradient curve from a minimum value of a range of the pixel values where the gradient curve has a positive value to the input pixel value.

Further, in the embodiment written in item 20 according to the method of any one of items 12 to 19, the setting step sets an integrated value of the gradient curve over a whole of the plurality of pixel values to a default value according to a type of an output apparatus.

In the embodiment written in item 21 according to the method of any one of items 12 to 19, the setting step may comprise an operating step for inputting the integrated value of the gradient curve over a whole of the plurality of pixel values.

Further, the embodiment written in item 22 according to the method of any one of items 12 to 21, further includes: an optimizing step of using the gradation conversion curve as a basic gradation conversion curve and optimizing the basic gradation conversion curve by a shift amount shifting the basic gradation conversion curve parallel to a pixel-value direction and by a rotating amount changing a gradation amount of the basic gradation conversion curve; wherein the generating step comprises a determining step of determining the shift amount and the rotating amount based on the gradient curve.

The embodiment written in item 23 is a program of processing image information according to has: an input step of inputting image information of a subject; a setting step of setting a gradient curve representing a change rate of an output value between neighbor values of each of the plurality of pixel values of the image information; a generating setting step generating a gradation conversion curve by integrating the gradient curve; and an image processing setting step applying a gradation conversion to the image information by using the gradation conversion curve.

In the embodiment written in item 24 according to the program of item 23, the setting step comprises an operating setting step inputting a plurality of pixel values and a plurality of gradient curve values corresponding to the plurality of pixel values.

Further, in the embodiment written in item 25, according to the program of item 23, the setting step sets the gradient curve to a convex function of a pixel value of the image information.

Further, in the embodiment written in item 26 according to the program of item 25, the setting step comprises an operating setting step inputting: a minimum value and a maximum value of a range of the plurality of pixel values where the gradient curve has a positive value; a maximum value of the gradient curve; and a pixel value of the maximum value of the gradient curve.

Further, in the embodiment written in item 27 according to the program of item 25, the setting step comprises an operating setting step inputting a minimum value and a maximum value of a range of the plurality of pixel values where the gradient curve has a positive value.

Herein, in the embodiment written in item 28 according to the program of item 25, the setting step may further set integrated value of the gradient curve over a whole of the plurality of pixel values according to the type of an output apparatus.

In the embodiment written in item 29 according to the program of item 25, the operating step may further operats an integrated value of the gradient curve over a whole of the plurality of pixel values.

In the embodiment written in item 30 according to the program of item 27, the operating step may further input: an input pixel value; a value of the gradient curve corresponding to the input pixel value; and an integrated value of the gradient curve from a minimum value of a range of the pixel values where the gradient curve has a positive value to the input pixel value.

Further, in the embodiment written in item 31 according to the program of any one of items 23 to 31, the setting step sets an integrated value of the gradient curve over a whole of the plurality of pixel values to a default value according to a type of an output apparatus.

In the embodiment written in item 32 according to the program of any one of items 23 to 31, the setting step may comprise an operating step for inputting the integrated value of the gradient curve over a whole of the plurality of pixel values.

Further, the embodiment written in item 33 according to the program of any one of items 23 to 32, further includes: an optimizing step of using the gradation conversion curve as a basic gradation conversion curve and optimizing the basic gradation conversion curve by a shift amount shifting the basic gradation conversion curve parallel to a pixel-value direction and by a rotating amount changing a gradation amount of the basic gradation conversion curve; wherein the generating step comprises a determining step of determining the shift amount and the rotating amount based on the gradient curve.

According to the embodiment written in item 2, because the setting section inputs a plurality of pixel values and a value of the gradient curve corresponding to the pixel value by the operating section, the gradient curve can be set in detail into the shape desired by the operator.

According to the embodiment written in item 3, because the setting step makes the gradient curve the convex function, the contrast is gently increased, and the natural shape in which the contrast is gently lowered after the contrast becomes the maximum, can be obtained.

According to the embodiment written in item 4, because the setting step inputs the minimum value and the maximum value of the range of pixel values in which the gradient curve has the positive value, and the maximum value of the gradient curve and the pixel value having the maximum value by the operating section, by using only main parameters, the convex function can be simply set.

According to the embodiment written in each of items 5 - 8, because the setting step inputs a minimum value and a maximum value of a range of the plurality of pixel values where the gradient curve has a positive value, by using only main parameters, the convex function can be simply set.

According to the embodiment written in each of items 9 and 10, because the setting section makes the integrated values over all pixel values of the gradient curve the predetermined value, the range of the signal converted by the gradation conversion curve can be within a predetermined range.

According to the embodiment written in item 11, because the calculation section calculates the shift amount and the rotation amount based on the gradient curve by the calculation step, by using the conventional optimizing section, the basic gradation conversion curve to which the gradient curve is reflected, can be easily set.

According to the embodiments written in items 12 - 22 and items 23 - 33, similar effect to embodiments written in items 1 - 11 can be obtained, respectively.

While the preferred embodiments of the present invention have been described using specific terms, such description is for illustrative purposes only, and it is to be understood that changes and variations may be made without departing from the sprit or scope of the appended claims.

Referring to the attached drawings, embodiments of the invention will be detailed below. Hereupon, hereby, the present invention is not limited.

(Embodiment 1)

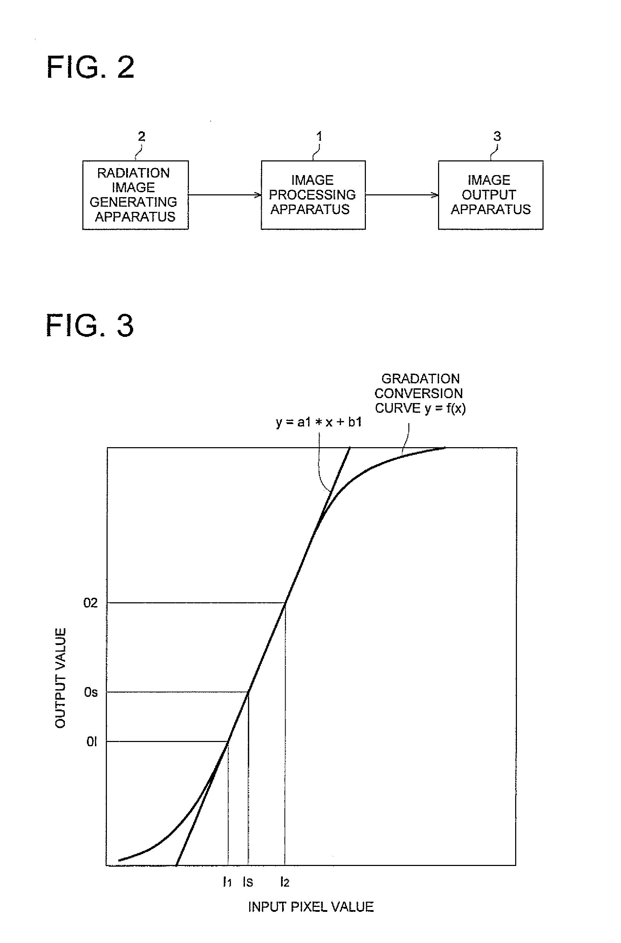

Initially, an entire structure of an X-ray image generation system including an image processing apparatus 1 according to the present embodiment 1 will be described. Fig. 2 is a block diagram showing this entire structure. This entire structure includes a radiation image generating apparatus 2, image processing apparatus 1 and image output apparatus 3. The radiation image generating apparatus 2 is an apparatus for acquiring the image information of the subject by using the radiation such as CR or FPD (Flat Panel Detector). The image processing apparatus 1 is an apparatus which applies the image processing such as the gradation conversion processing to the image information acquired through a communication line or a network from the radiation image generating apparatus 2. The image output apparatus 3 is structured by, for example, a highly fine monitor or an imager, and an apparatus by which the image information of the image processing apparatus 1 on which the image processing is conducted, is outputted the monitor display or the film which can be read by a doctor.

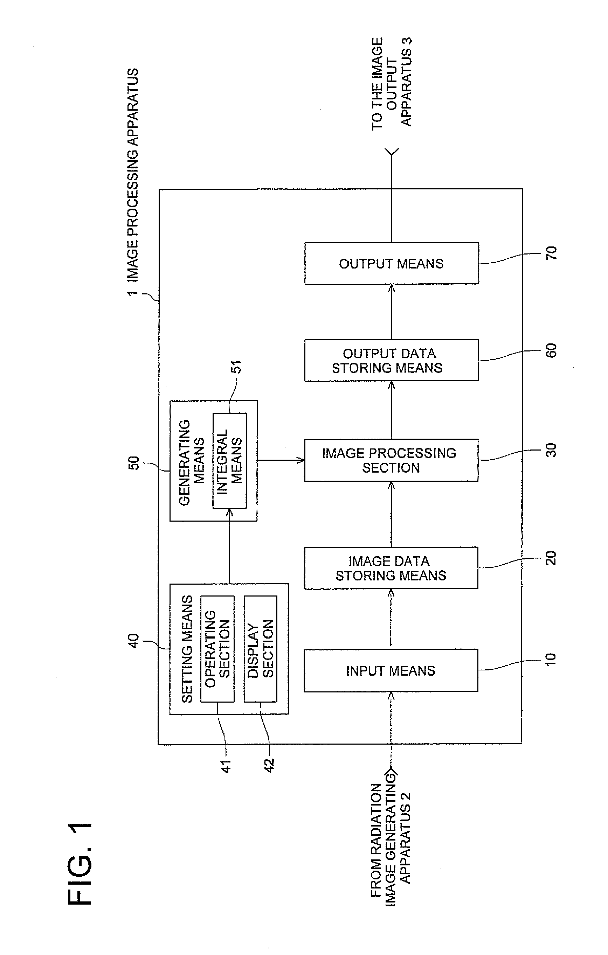

Fig. 1 is a function block diagram showing the structure of the image processing apparatus 1. Hereupon, this structure can also be structured by any one of the hardware, firmware, or software and the combination thereof. The image processing apparatus 1 includes an input means 10 for inputting image information, image data storing means 20, image processing section 30, setting means 40, generating means 50, output data storing means 60 and output means 70. Furthermore, the image processing apparatus 1 can be realized as an image processing system in which each or part of the above described means and section included in the image processing apparatus 1 is provided as independent apparatus.

The input means 10 is an interface for inputting the image information generated in the radiation image generating apparatus 2, for example, the image information having the resolution of 12 bits of 0 to 4095 which relates to the amount of a transmitted radiation, and the image data storing means 20 memorizes and stores this inputted image information.

The setting means 40 includes the operating section 41 which is an input apparatus provided with a display section 42 which is structured by a CRT or LCD and which is a GUI when the operator conducts an adjustment operation of each kind of parameters, and a keyboard, and conducts the setting of each kind of parameters by which the image processing from the operating section 41 and further, the formation of the image processing condition by using these each kind of parameters. Particularly, the parameters for determining the gradient curve which will be described later, is inputted and the gradient curve is determined from these parameters.

The generating means 50 includes the integration means 51, acquires the gradient curve information determined by the setting means 40, and integrates this gradient curve and generates the gradation conversion curve. This gradation conversion curve is used when the gradation processing is conducted in the image processing section 30.

The image processing section 30 conducts the gradation processing on the image information stored in the image data storing means 20. The output data storing means 60 stores the displayed image information which is gradation processed by the image processing section 30 and outputs the displayed image to output means 70, and the output means 70 outputs this displayed image information to the image output apparatus 3. Herein, the displayed image information stored in the output data storing means 60 includes density values on a film corresponding to the image information inputted in the image data storing means 20 when the output means 70 output the information on a film, and includes intensity values on a monitor corresponding to the image information inputted in the image data storing means 20 when the output means 70 output the information on the monitor.

Herein, the gradient curve set by the setting means 40, and the gradation conversion curve generated by the generating means 50 will be detailed. Initially, the gradation conversion curve is a function by which the output value of the image information with respect to the input pixel value (transmitted X-ray amount) of the image information stored in the image data storing means 20 is determined. In Fig. 3, an example of the curve y = f(x) which is this gradation conversion curve is shown. The abscissa shows the input pixel value x, and the ordinate shows the output value y.

In the gradation conversion curve in Fig. 3, the gradient is the maximum in the vicinity of the input pixel value Is. Accordingly, an region in the vicinity of this Is is enlarged into the region of the large output value and becomes a high contrast condition. Hereupon, in Fig. 3, the tangent line of the gradation conversion curve y = f(x) in the input pixel value Is is shown by y = a1 * x + b1, and the maximum gradient is shown by a1.

Herein, the input pixel value Is of the gradation conversion curve is conformed to the pixel value of the region of interested which is included in the image information of the transmitted X-ray of the subject and in which the doctor desires the reading with particularly high contrast. Hereby, the image of the region of interested can be read with the high contrast. Further, when the gradient a1 of the gradation conversion curve in the vicinity of Is is changed, the amount of the contrast is also changed.

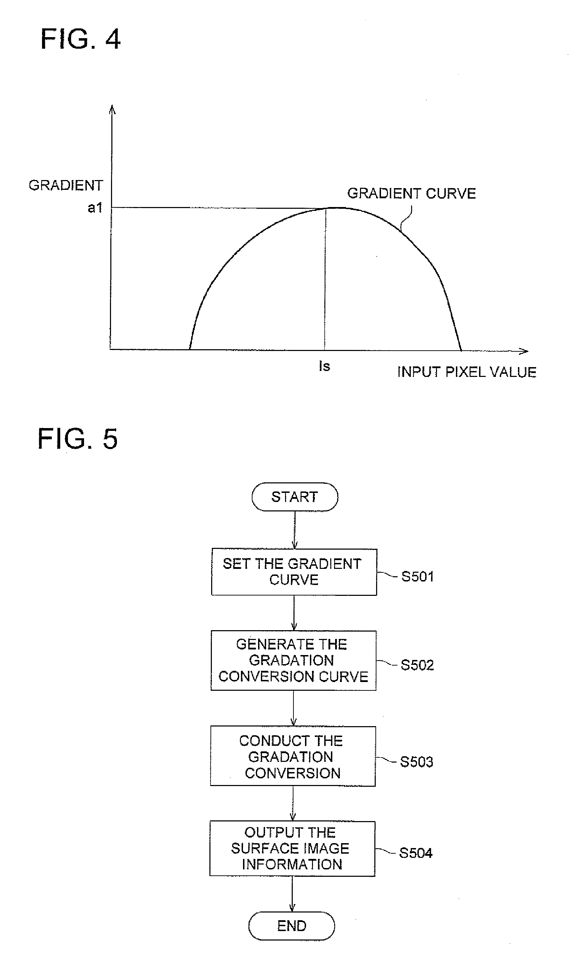

The gradient curve set by the setting means 40 is a function showing a change rate of an output value between neighbor values of each of the plurality of pixel values of the image information. Fig. 4 is an example of the gradient curve. Hereupon, the gradient curve herein expresses a change rate of the output values with respect to the input pixel values the vicinity thereof, that is, the gradient of the gradation conversion curve. In Fig. 4, the abscissa is the input pixel value and the ordinate shows a change rate of the output value (the gradient of the gradation conversion curve). Herein, the gradient function generally forms a convex function form, and is set for each body part by the operator, and is appropriate for the reading. Further, this gradient function institutionally expresses amount of the contrast for each input pixel value, the operator sensuously easily catch it, and can set the contrast in detail for each input pixel value, and can also set it easily.

The gradation conversion curve is generated by integrating this gradient curve. Accordingly, the gradient for each input pixel value of the gradation conversion curve is a value of the gradient curve, that is, change rate of the output values is reflected. For example, in the gradient curve in Fig. 4, it is the maximum contrast in the vicinity of the input pixel value Is, that is, the maximum gradient a1, on the other hand, in the gradation conversion curve shown in Fig. 3, it is the maximum gradient amount a1 in the vicinity of the input pixel value Is and the change rate of the output values is the maximum. Further, also in the range separated from the vicinity of the input pixel value Is of the gradation conversion curve, it can be an arbitrary shape characteristic based on the gradient curve.

Hereupon, the maximum output value of the gradation conversion curve has a predetermined value of for example, 4095 which is inherent to the image processing apparatus 1.

Since the following relationship is formed between gradation conversion curve G(x) and gradient curvilinear g(x), in order that the gradient curve becomes a convex function and the gradation conversion curve forms the S letter-shape, it is required that the area of a gradient curve should be have a constant (the maximum output value).

$$G(x) = \int_0^x g(x)dx$$

Herein, in the maximum output value in which the gradient curve is integrated over all areas of the input pixel value, the integration value is set so as to be the predetermined value, for example, 4095, and the gradient curve is standardized by this predetermined value. This predetermined value could be adjusted depending on the type of the display and imager.

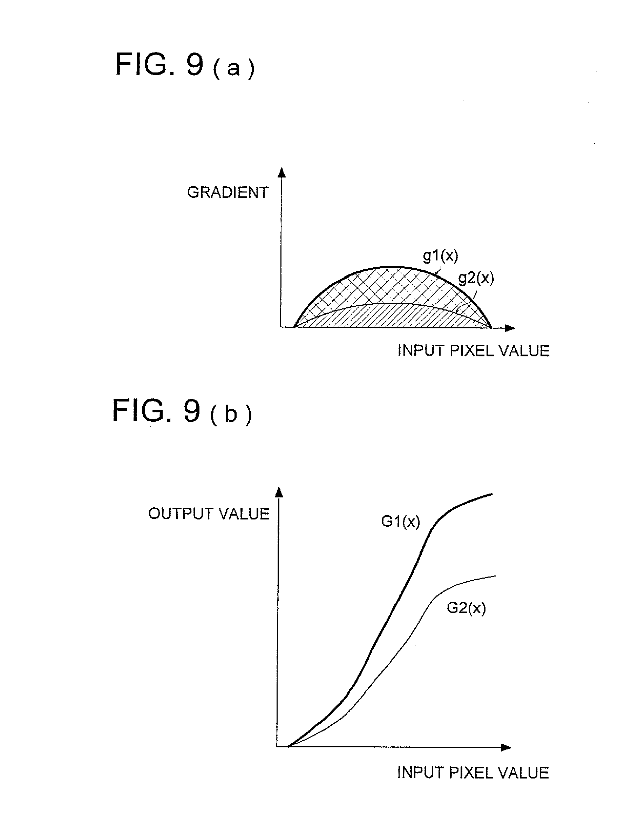

Further, in order to obtain the adequate gradation conversion curve without using the maximum gradient amount a1, a range where the gradient curve has a positive value and an area of the gradient curve (an integrated value of the gradient curve over all areas of the plurality of pixel values) can also be indicted. Fig. 9(a) shows the gradient curves g1(x), g2(x) having different areas. The abscissa expresses the input pixel value and the ordinate expresses the gradient amount. Fig. 9(b) shows the gradation conversion curves G1(x), G2(x) corresponding to g1(x), g2(x). The abscissa expresses the input pixel value and the ordinate expresses the output value.

When it is indicated such that the gradient curve has the same range in which it takes values except of 0, and has the different area, the shape of the gradient curves g1(x), g2(x) can be changed. Hereby, the gradation conversion curve having a desired S letter-shaped curve can be obtained.

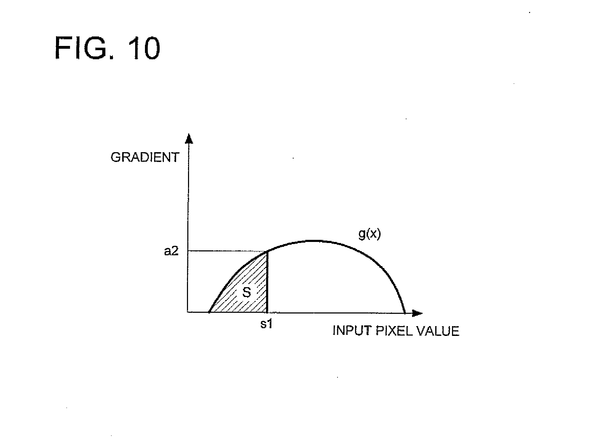

Further, by indicating an area of the gradient curve in the case that an arbitral input pixel value is indicated, and a gradient amount corresponding to the arbitral input pixel value, the gradation conversion curve adequate for an observed body part can also be made. For example, as shown in Fig. 10, the gradient curve whose area S is constant and whose gradient a1 is constant when an input pixel value is s1 is defined. The area of the gradient curve on the input pixel value s1, expresses the output value corresponding to the input pixel value s1 in the gradation conversion curve. Accordingly, the gradation conversion curve is deformed so that the desired gradient amount of a gradation conversion curve is also maintained while the desired relationship of the input/output on a predefined position of the gradation conversion curve is kept. Accordingly, the gradation conversion curve specific to the body part can be simply made.

For example, when inputted pixel values corresponding to the transmitted radiation amount (or values in which the transmitted radiation amount is log transformed) of the mammary gland region of the mamma is defined as the input pixel value s1, and the density (or intensity) in which the mammary gland area is to be reproduced is indicated as an area of the gradient curve on the input pixel value s1, a desired gradation characteristic which reproduces the mammary gland area with a predetermined density, can be obtained.

Further, by changing an input pixel value range where the gradient curve has a positive value with keeping an area of the gradient curve (an integrated value of the gradient curve over a whole of the plurality of input pixel values) constant, a desired gradation conversion curve can be obtained.

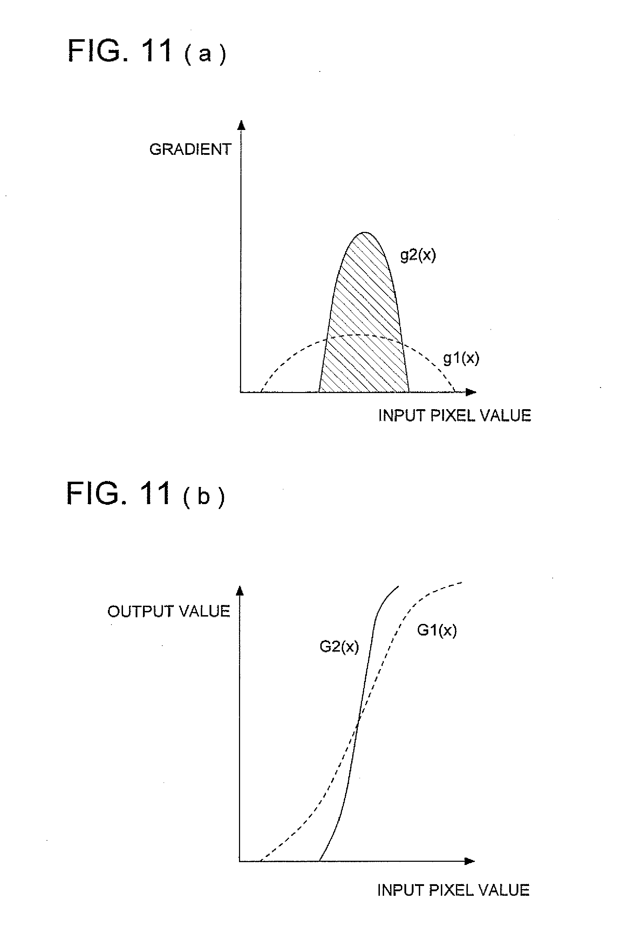

Fig. 11(a) shows the gradient curves g1(x), g2(x). The abscissa expresses the input pixel value, and the ordinate expresses the gradient amount. Fig. 11(b) shows the gradation conversion curves G1(x), G2(x) corresponding to g1(x), g2(x). The abscissa expresses the input pixel value and the ordinate expresses the output value.

For example, when it is required to make the gradation conversion curve G2(x) appropriate for the image whose input pixel value ranges narrow than the gradation conversion curve G1(x) as shown in Fig. 11 (b), the gradient curve is deformed so that a range of the input pixel value where the gradient curve has a value not being zero matches a desired range of the input pixel value as g1(x) in Fig. 11(a). Hereby, the height of the gradient curve becomes high in inverse proportion to the range of the input pixel value, and as the result, the gradation conversion curve whose contrast is high can be made.

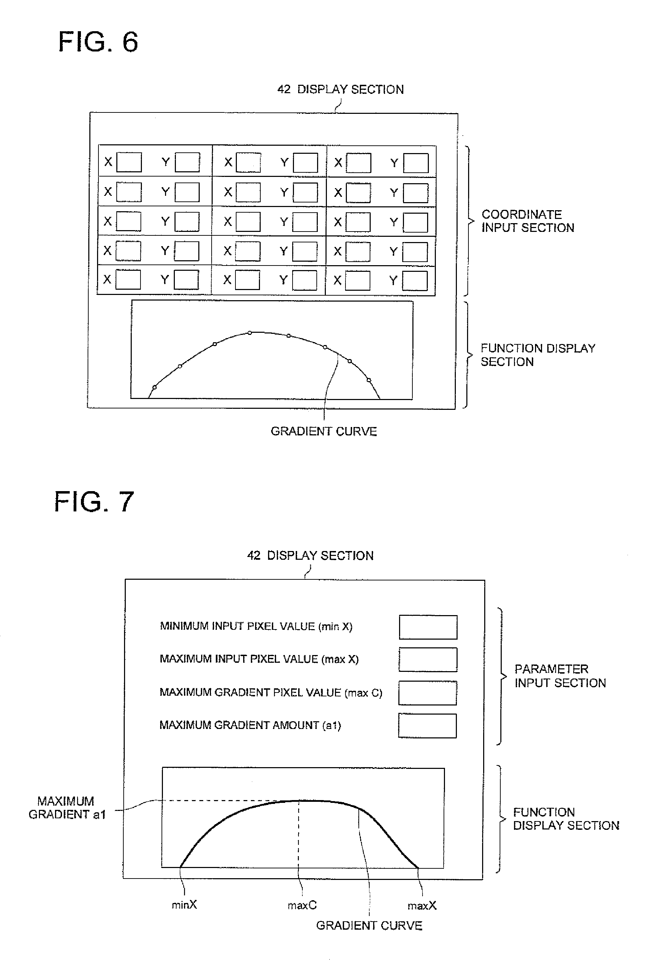

Successively, the operation of the image processing apparatus 1 according to the present embodiment will be described. Fig. 5 is a flowchart showing the operation of the image processing apparatus 1. Initially, the operator sets the gradient curve by using the setting means 40 (step S501). An example of this setting is shown in Figs. 6 and 7. Fig. 6 is an example in which the shape of the gradient curve is directly indicated on the display screen provided in the display section 42 of the setting means 40. The display screen includes a coordinate input section for inputting a plurality of coordinate points of the gradient function, and a function display section for displaying the inputted gradient function. From the operating section 41, each of points on the gradient function is successively inputted as the coordinate value. Then, based on these coordinate values, the gradient function is found by an interpolation processing or fitting of the function. Hereupon, the function display section displays the gradient function determined based on the input coordinate values in which the abscissa is defined as the input pixel value, and the ordinate is defined as a gradient amount or contrast.

Fig. 7 is the display screen provided in the display section 42 of the setting means 40, and is an example in which the shape of the gradient curve is indicated by the main parameters from the operating section 41. The display screen includes a parameter input section for inputting main parameters and a function display section for displaying the inputted gradient function. The main parameters are inputted from the operating section 41 and the gradient function determined based on these main parameters is found.

Hereupon, in the function display section, the abscissa is defined as the input pixel value and the ordinate is defined as the gradient amount, and the gradient function determined based on the main parameters is displayed.

Herein, as the main parameters, for example, the minimum value minX and the maximum value maxX of the input pixel values and the pixel value maxC having the maximum gradient amount and a value of the maximum gradient amount a1 are used. Further, as the fitting function, the function which is called "smudge" function and is smoothly convex to the above, can be used, or a convex function stored in the table such as LUT can be used. Hereupon, depending on the shape of function, further as main parameters, the width of the vicinity region of pixel value maxC having the maximum gradient amount a1 can also be set.

Further, it can be used as the main parameters, that the minimum value minX and the maximum value maxX of the input pixel values and the integrated value of the gradient curve over a whole of the plurality of pixel values. It also can be used as the main parameters, that the minimum value minX and the maximum value maxX of the input pixel values, the integrated value of the gradient curve over a whole of the plurality of pixel values, an arbitral input pixel value s1 and an area S on the arbitral input pixel value, which is of the gradient curve from a minimum value of a range of the pixel values where the gradient curve has a positive value to the input pixel value. Hereupon, inputting of the maximum output value can be omitted when an integrated value of the gradient curve over a whole of the plurality of pixel values or a value according to the type of the image output apparatus such as normal density or high density, or imager or viewer is used as the maximum output value. In this case, characteristic of the image output apparatus 3 can be set for the maximum output value in advance.

Return to Fig. 5, the generating means 50 integrates the set gradient function by the integration means 51, and generates the gradation conversion curve (step S502).

Herein, the gradation conversion curve as shown in Fig. 3 is obtained.

After that, the image processing section 30 obtains the image information from the image data storing means 20 and the gradation conversion curve information from the generating means 50, and applies the gradation conversion (step S503). Herein, the image processing section 30 finds the processed image information which is gradation-converted, and stores it in the output data storing means 60.

After that, the output means 70 outputs the image information to the image output apparatus 3 (step S504), and completes the present processing.

As described above, in the present embodiment 1, the gradation conversion curve is generated by means of integration of the gradient curve which reflects the change rate of the gradation conversion curve for each input pixel value, and this gradient curve is set to the shape desired by the doctor by the setting means 40. It allows that the doctors easily converge the gradation for vicinity of the input pixel values indicated by the doctors to higher contrast, and easily converge the gradation for a wider range of the input pixel values to contrast distribution indicated by the doctors in this gradation conversion process using the gradation conversion curve.

Therefore, the reading of the image information can be conducted under the condition that the region of interested is observed precisely and easily.

Further, in the present embodiment 1, one X-ray image generation system is structured by the three different apparatus, that is, the radiation image generating apparatus 2, image processing apparatus 1 and image output apparatus 3, however, these plural apparatus can also be made into one apparatus by integrating each other. For example, the image processing apparatus is included in the radiation image generating apparatus, and they can also be integrated.

(Embodiment 2).

Hereupon, in the above embodiment 1, the gradation conversion curve is directly found by integrating the gradient curve, however, when the information of the gradient curve set by the setting means 40 is used for the method by which the shift amount and rotation amount are applied for the basic gradation conversion curve stored in the conventionally used LUT, and the optimum gradation conversion curve is formed, further optimum gradation conversion curve can also be generated. Accordingly, in the present embodiment 2, a case where the basic gradation conversion curve, shift amount and rotation amount are determined from the gradient curve, will be shown.

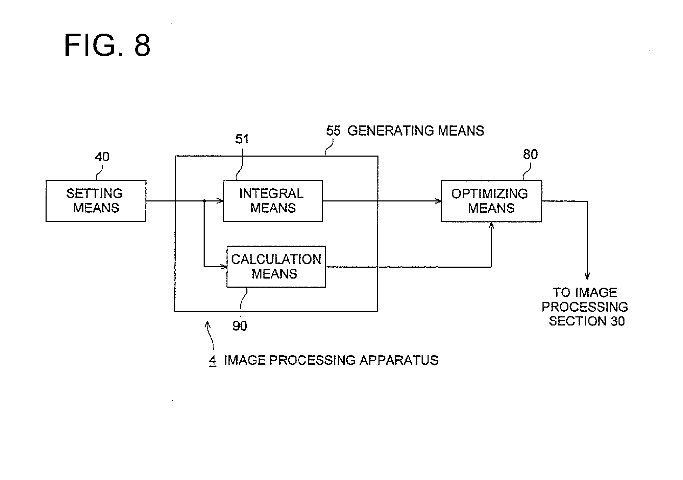

Herein, the structure of the hardware of the image processing apparatus 4 according to the present embodiment 2 is the same as the apparatus shown in Figs. 1 - 2 with neglecting the image processing apparatus 1, generating means 50 and optimizing means 80, and the description of the same part is neglected and only the different part will be described. Fig. 8 is a block diagram of a part in which the generating means 55 and the optimizing means 80 of the image processing apparatus 4 according to the present embodiment 2 are centered. A part of the image processing apparatus 4 shown in Fig. 8 is structured by the setting means 40, generating means 55 and optimizing means 80, and corresponds to the setting means 40 and generating means 50 of the image processing apparatus 1 shown in Fig. 1.

In the image processing apparatus 4 of Fig. 8, in addition to the setting means 40 which is the same as in the image processing apparatus 1 of Fig. 1, the generating means 55 and the optimizing means 80 are included. Further, the generating means 55 includes the calculation means 90 in addition to the integration means 51. The setting means 40 and integration means 51, in entirely the same manner as the embodiment 1, integrates the set gradient function and generates the gradation conversion curve. Then, this gradation conversion curve is transferred as the basic gradation conversion curve to the optimizing means 80.

The optimizing means 80 forms the optimum gradation conversion curve based on the basic gradation conversion curve from the generating means 50 and the shift amount and the rotation amount from the calculation means 90. Then, this gradation conversion curve is outputted to the image processing section 30. Herein, the shift amount and the rotation amount to optimize the basic gradation conversion curve will be described.

The basic gradation conversion curve is the function y = f(x) as shown in Fig. 3. To this function, by 2 parameters of the shift amount s expressing the parallel movement amount of the basic gradation conversion curve and the rotation amount g expressing the gradient of the straight line part, the optimized gradation conversion curve is determined. The straight line region of the basic gradation conversion curve shown in Fig. 3, is expressed by y = a1 * x + b1. Herein, as the parameter for adjustment to obtain the desired gradation conversion curve, the shift amount s in which, to the basic gradation conversion curve y = f(x), the parallel movement to the negative direction of x-axis is made a positive value, or the rotation amount g which is the gradient of the gradation conversion curve in which, to the basic gradation conversion curve y = f(x), the gradient of the straight line part is changed on the basis of a predetermined output value Os, are defined. When this shift amount and the rotation amount are adjusted, the gradation conversion curve whose shape is changed on the basis of the basic gradation conversion curve y = f(x) is obtained.

For example, the input pixel value to the output value Os of the basic characteristic curve y = f(x) is made Is, an arbitrary gradation conversion curve determined by the above-described shift amount s and the rotation amount g is obtained, when, from the basic gradation conversion curve y = f(x), the independent variable x is replaced with a new variable x', that is, x' = g/a1 * (x + s) + (1 - g/a1) * Is. Hereupon, when the variable x' is not an integer value, by using the integer value closest to x', the gradation conversion curve value is found, and by a linear interpolation, it can also be refined.

The calculation means 90 calculates the above-described shift amount s and rotation amount g from the gradient curve set by the setting means 40. As the calculation means, for example, to the entire image signals, or specific region of interested, the histogram is made and by the setting of the gradient curve based on this histogram, by using the maximum value M, minimum value m, median d = (M + m)/2 of this histogram, it may be given by g = C/(M - m), s =Is - d. Herein, C is a predetermined constant.

Hereupon, the operation of the image processing apparatus 4 is the same as the flowchart shown in Fig. 5 from which step S502 is neglected. Hereupon, the generation of the gradation conversion curve of step S502 is conducted as described above, by using the generating means 55 and the optimizing means 80.

As described above, in the present embodiment 2, because, by using the gradient function set by the setting means 40, the basic gradation conversion curve which is base of the gradation conversion curve is generated, further, from this gradient function, the shift amount s and the rotation amount g are found, and the basic gradation conversion curve is made the optimum gradation conversion curve, without the basic gradation conversion curve being made as the limited curve previously stored in LUT, but made the curve which is optimum for the reading, thereby, the reading of the image information can be conducted under the condition that the region of interested of the body parts is precisely and easily observed.

**Claims**

1. A system for processing image information, comprising:

   an input section for inputting image information of a subject;
   a setting section for setting a gradient curve representing a change rate of an output value between neighbor values of each of the plurality of pixel values of the image information;
   a generating section for generating a gradation conversion curve by integrating the gradient curve; and
   an image processing section for applying a gradation conversion to the image information by using the gradation conversion curve.

2. The system of claim 1,
   wherein the setting section comprises an operating section for inputting a plurality of pixel values and a plurality of gradient curve values corresponding to the plurality of pixel values.

3. The system of claim 1,
   wherein the setting section sets the gradient curve to a convex function of a pixel value of the image information.

4. The system of claim 3,
   wherein the setting section comprises an operating section for inputting: a minimum value and a maximum value of a range of the plurality of pixel values where the gradient curve has a positive value; a maximum value of the gradient curve; and a pixel value of the maximum value of the gradient curve.

5. The system of claim 3,
   wherein the setting section comprises an operating section for inputting a minimum value and a maximum value of a range of the plurality of pixel values where the gradient curve has a positive value.

6. The system of claim 3,
   wherein the setting section sets an integrated value of the gradient curve over a whole of the plurality of pixel values to a default value according to a type of an output apparatus.

7. The system of claim 3,
wherein the operating section further inputs an integrated value of the gradient curve over a whole of the plurality of pixel values.

8. The system of claim 5,
wherein the operating section further inputs: an input pixel value; a value of the gradient curve corresponding to the input pixel value; and an integrated value of the gradient curve from a minimum value of a range of the pixel values where the gradient curve has a positive value to the input pixel value.

9. The system of claim 1,
wherein the setting section sets an integrated value of the gradient curve over a whole of the plurality of pixel values to a default value according to a type of an output apparatus.

10. The system of claim 1,
wherein the setting section comprises an operating section for inputting the integrated value of the gradient curve over a whole of the plurality of pixel values.

11. The system of claim 1, further comprising:

an optimizing section for using the gradation conversion curve as a basic gradation conversion curve and optimizing the basic gradation conversion curve by a shift amount shifting the basic gradation conversion curve parallel to a pixel-value direction and by a rotating amount changing a gradation amount of the basic gradation conversion curve;

wherein the generating section comprises a calculation section for calculating the shift amount and the rotating amount based on the gradient curve.

12. A method of processing image information, comprising:

an input step of inputting image information of X-ray transmitted through a subject;
an setting step of setting a gradient curve representing a change rate of an output value between neighbor values of each of the plurality of pixel values of the image information;
a generating step of generating a gradation conversion curve by integrating the gradient curve; and
an image processing step of applying a gradation conversion to the image information by using the gradation conversion curve.

13. The system of claim 12,
wherein the setting step comprises an operating step of inputting a plurality of pixel values and a plurality of gradient curve values corresponding to the plurality of pixel values.

14. The method of claim 12,
wherein the setting step sets the gradient curve to a convex function of a pixel value of the image information.

15. The method of claim 14,
wherein the setting step comprises an operating step of inputting: a minimum value and a maximum value of a range of the plurality of pixel values where the gradient curve has a positive value; a maximum value of the gradient curve; and a pixel value of the maximum value of the gradient curve.

16. The method of claim 14,
wherein the setting step comprises an operating step of inputting a minimum value and a maximum value of a range of the plurality of pixel values where the gradient curve has a positive value.

17. The method of claim 14,
wherein the setting step sets an integrated value of the gradient curve over a whole of the plurality of pixel values to a default value according to a type of an output apparatus.

18. The method of claim 14,
wherein the operating step further inputs an integrated value of the gradient curve over a whole of the plurality of pixel values.

19. The method of claim 16,
wherein the operating step further inputs: an input pixel value; a value of the gradient curve corresponding to the input pixel value; and an integrated value of the gradient curve from a minimum value of a range of the pixel values where the gradient curve has a positive value to the input pixel value.

20. The method of claim 12,
wherein the setting step sets an integrated value of the gradient curve over a whole of the plurality of pixel values to a default value according to a type of an output apparatus.

21. The method of claim 12,
wherein the setting step comprises an operating step of inputting the integrated value of the gradient curve over a whole of the plurality of pixel values.

22. The method of claim 12, further comprising:

an optimizing step of using the gradation conversion curve as a basic gradation conversion curve and optimizing the basic gradation conversion curve by a shift amount shifting the basic gradation conversion curve parallel to a pixel-value direction and by a rotating amount changing a gradation amount of the basic gradation conversion curve;
wherein the generating step comprises a calculation step of calculating the shift amount and the rotating amount based on the gradient curve.

23. A program of processing image information, comprising:

an input step of inputting image information of X-ray transmitted through a subject;
an setting step of setting a gradient curve representing a change rate of an output value between neighbor values of each of the plurality of pixel values of the image information;
a generating step of generating a gradation conversion curve by integrating the gradient curve; and
an image processing step of applying a gradation conversion to the image information by using the gradation conversion curve.

24. The program of claim 23,
wherein the setting step comprises an operating step of inputting a plurality of pixel values and a plurality of gradient curve values corresponding to the plurality of pixel values.

25. The program of claim 23,
wherein the setting step sets the gradient curve to a convex function of a pixel value of the image information.

26. The program of claim 25,
wherein the setting step comprises an operating step of inputting: a minimum value and a maximum value of a range of the plurality of pixel values where the gradient curve has a positive value; a maximum value of the gradient curve; and a pixel value of the maximum value of the gradient curve.

27. The program of claim 25,
wherein the setting step comprises an operating step of inputting a minimum value and a maximum value of a range of the plurality of pixel values where the gradient curve has a positive value.

28. The program of claim 25,
wherein the setting step sets an integrated value of the gradient curve over a whole of the plurality of pixel values to a default value according to a type of an output apparatus.

29. The program of claim 25,
wherein the operating step further inputs an integrated value of the gradient curve over a whole of the plurality of pixel values.

30. The program of claim 27,
wherein the operating step further inputs: an input pixel value; a value of the gradient curve corresponding to the input pixel value; and an integrated value of the gradient curve from a minimum value of a range of the pixel values where the gradient curve has a positive value to the input pixel value.

31. The program of claim 23,
wherein the setting step sets an integrated value of the gradient curve over a whole of the plurality of pixel values to a default value according to a type of an output apparatus.

32. The program of claim 23,
wherein the setting step comprises an operating step of inputting the integrated value of the gradient curve over a whole of the plurality of pixel values.

33. The program of claim 23, further comprising:

an optimizing step of using the gradation conversion curve as a basic gradation conversion curve and optimizing the basic gradation conversion curve by a shift amount shifting the basic gradation conversion curve parallel to a pixel-value direction and by a rotating amount changing a gradation amount of the basic gradation conversion curve;
wherein the generating step comprises a calculation step of calculating the shift amount and the rotating amount based on the gradient curve.

# FIG. 1

# FIG. 2

```
   2                      1                      3
┌─────────────┐     ┌─────────────┐     ┌─────────────┐
│  RADIATION  │     │    IMAGE    │     │    IMAGE    │
│    IMAGE    │────▶│ PROCESSING  │────▶│   OUTPUT    │
│ GENERATING  │     │  APPARATUS  │     │  APPARATUS  │
│  APPARATUS  │     │             │     │             │
└─────────────┘     └─────────────┘     └─────────────┘
```

# FIG. 3

GRADATION
CONVERSION
CURVE y = f(x)

$y = a1 * x + b1$

OUTPUT VALUE

O2

Os

Ol

I1   Is   I2

INPUT PIXEL VALUE

# FIG. 4

# FIG. 5

# FIG. 6

42 DISPLAY SECTION

COORDINATE INPUT SECTION

FUNCTION DISPLAY SECTION

GRADIENT CURVE

# FIG. 7

42 DISPLAY SECTION

MINIMUM INPUT PIXEL VALUE (min X)

MAXIMUM INPUT PIXEL VALUE (max X)

MAXIMUM GRADIENT PIXEL VALUE (max C)

MAXIMUM GRADIENT AMOUNT (a1)

PARAMETER INPUT SECTION

MAXIMUM GRADIENT a1

FUNCTION DISPLAY SECTION

minX          maxC          maxX

GRADIENT CURVE

# FIG. 8

SETTING MEANS — 40

55 GENERATING MEANS

INTEGRAL MEANS — 51

CALCULATION MEANS — 90

OPTIMIZING MEANS — 80

TO IMAGE PROCESSING SECTION 30

4 IMAGE PROCESSING APPARATUS

EP 1 626 567 A2

FIG. 9 (a)

GRADIENT

g1(x)
g2(x)

INPUT PIXEL VALUE

FIG. 9 (b)

OUTPUT VALUE

G1(x)

G2(x)

INPUT PIXEL VALUE

# FIG. 10

# FIG. 11 ( a )

GRADIENT

g2(x)

g1(x)

INPUT PIXEL VALUE

# FIG. 11 ( b )

OUTPUT VALUE

G2(x)

G1(x)

INPUT PIXEL VALUE